# EUROPÄISCHE PATENTSCHRIFT

(11) **EP 0 989 026 B1**
(45) Veröffentlichungstag und Bekanntmachung des Hinweises auf die Patenterteilung: **17.12.2008**
(21) Anmeldenummer: 99118432.6
(22) Anmeldetag: 17.09.1999
(51) Int. Cl.: B60Q 3/02

(54) **Flugzeugkabinen-Beleuchtung**
Aircraft cabin lighting
Eclairage de la cabine d'un avion

(30) Priorität: 22.09.1998 DE 19843330
(43) Veröffentlichungstag der Anmeldung: 29.03.2000
(73) Patentinhaber: Diehl Aerospace GmbH, 88662 Überlingen (DE)
(72) Erfinder: Fleischmann, Walter, 90584 Allersberg (DE)
(74) Vertreter: Diehl Patentabteilung

(56) Entgegenhaltungen:
- EP-A- 0 125 362
- EP-A- 0 348 637
- WO-A-97/46055
- DE-U- 29 719 024
- FR-A- 2 620 396
- US-A- 5 155 669

## Beschreibung

Die Erfindung betrifft eine an oder in der Decke eines Fahrzeugs anbringbare Beleuchtung, insbesondere in einer Flugzeugkabine anbringbare Kabinenbeleuchtung.

Die herkömmliche Beleuchtung von Flugzeugkabinen erfolgt mittels Leuchtstoffröhren, deren elektrische Ansteuerung den besonderen Erfordernissen im Flugzeug z. B. im Hinblick auf elektro-magnetische Störungsfreiheit genügen muss und somit einigermaßen aufwendig ist.

Für die Notbeleuchtung in Flugzeugkabinen werden bisher Niederspannungs-Glühbirnen verwendet, die in regelmäßigen Abständen ausgetauscht werden müssen, da sie nur eine sehr begrenzte Lebensdauer besitzen. Um die im Flugzeugbau geltenden Spezifikationen betreffend der Abstrahlcharakteristik zu erfüllen, sind diese Glühbirnen in speziell ausgeformten Reflektorgehäusen untergebracht, wie dies zum Beispiel in der US 4,158,223 beschrieben ist.

Aus der gattuagsgemäßen US 5,155,669 ist ein streifenförmig ausgebildetes Lichtmodul mit voneinander beabstandet aufgebrachten Leuchtflecken bzw. Leuchtzeichen bekannt. Die Leuchtflecken bzw. Leuchtzeichen weisen jeweils mehrere miteinander parallel oder in Reihe verschaltete Leuchtdioden auf. Das Lichtmodul ist gedacht zur Anbringung an Objekte wie z. B. ein Automobil, ein Fahrrad oder an die Kleidung einer Person.

Aus der WO 97/46055 ist eine Hintereinanelerschaltung von Glühbirnen bekannt, wobei den einzelnen Glühbirnen jeweils zwei gegeneinander geschaltete Zener-Dioden parallel geschaltet sind.

Die FR 2 620 396 A1 beschreibt ein streifenförmiges Modul mit mehreren, beabstandet aufgebrachten und miteinander in Reihe geschalteten Leuchtdioden, welches in einer Nut des Unterbaus von Sitzgestellen in einem Omnibus angeordnet ist.

Die Aufgabe der vorliegenden Erfindung ist es, eine Fahrzeug-Beleuchtung zu schaffen, welche langlebig und weitestgehend wartungsfrei ist, einfach angesteuert werden kann und trotzdem die erforderlichen Spezifikationen erfüllt.

Erfindungsgemäß wird die Aufgabe durch eine Beleuchtung mit den Merkmalen des Anspruchs 1 gelöst. Weiterbildungen und zusätzliche Ausführungen der Erfindung sind in den Unteransprüchen beschrieben.

Im folgenden wird die Erfindung in Form einer Kabinenbeleuchtung für Luftfahrzeuge erläutert. Die Ausführungen treffen - was u. a. besonders die erfindungsgemäßen Eigenschaften und Vorteile betrifft - aber ebenso auf Beleuchtungen in Straßen-, Schienen-, Wasser- und sonstigen Fahrzeugen zu.

Durch die Anordnung mehrerer punktförmiger Lichtquellen an oder in der Decke der Kabine eines Luftfahrzeugs, vorzugsweise eines Flugzeugs, wird eine gleichmäßige Ausleuchtung der Kabine erreicht. Der Einsatz von Leuchtdioden (LED's) in den punktförmigen Lichtquellen macht eine aufwendige elektrische Ansteuerung der Kabinenbeleuchtung überflüssig. Zudem sinkt gegenüber der Verwendung von Glühbirnen der Stromverbrauch erheblich. Somit kann bei Verwendung von Leuchtdioden eine einfachere, kleinere Stromversorgung zum Einsatz kommen. Zudem ist die Lebensdauer von Leuchtdioden um ein Vielfaches höher als die von Leuchtstoffröhren und Glühbirnen, so daß das aufwendige Auswechseln von defekten Leuchten nicht mehr nötig ist. Leuchtdioden sind mit verschiedensten Abstrahlcharakteristiken herstellbar, weshalb die im Flugzeugbau geltenden, die Abstrahlcharakteristik von Lampen betreffenden Spezifikationen erfüllt werden können. Darüber hinaus ergeben sich für das Design der Kabinenbeleuchtung völlig neue Möglichkeiten ("Sternenhimmel").

In bevorzugter Ausführungsform ist zu jeder Leuchtdiode bzw. zu jeder Gruppe parallel miteinander verschalteter Leuchtdioden jeweils eine Zener-Diode in Sperrichtung parallel geschaltet. Mehrere solche Leuchteinheiten sind in Reihe geschaltet. Fällt nun eine der Leuchtdioden bzw. Leuchtdiodengruppen aus, so liegt an ihr und an der parallel geschalteten Zener-Diode ein Großteil der Versorgungsspannung an, was dazu führt, daß die Zener-Diode durchbricht. Auf diese Weise kann der Strom an der defekten Leuchtdiode bzw. Leuchtdiodengruppe "vorbeifließen", und es ist sichergestellt, daß bei Ausfall einer Leuchtdiode bzw. Leuchtdiodengruppe nicht der gesamte Strang hintereinander geschalteter Leuchteinheiten ausfällt. Die Stromversorgungseinheit ist nun bevorzugt so beschaffen, daß sie stets für einen konstanten Stromfluß sorgt, damit bei Ausfall einer oder auch mehrerer Leuchteinheiten die übrigen Leuchteinheiten nicht mit einer zu hohen Spannung beaufschlagt werden.

Je nach der Dichte der an der Decke der Flugzeugkabine angeordneten punktförmigen Lichtquellen kann die erfindungsgemäße Beleuchtung zur Ausleuchtung der Kabine, als Leselampen über den einzelnen Sitzplätzen oder als Notbeleuchtung über den zwischen den Sitzreihen befindlichen Gängen Verwendung finden. Je nach gewünschtem Design können verschiedene farbige Leuchtdioden oder vorzugsweise weiße Leuchtdioden eingesetzt werden. Bei den weißen Leuchtdioden kann es sich um aus zwei oder mehr farbigen Leuchtdioden gebildete Einheiten oder aus sogenannten Lumineszenzkonversions-Dioden handeln.

Anhand der Zeichnungen soll ein bevorzugtes Ausführungsbeispiel näher erläutert werden. Es zeigen:
- Figur 1: perspektivisch einen Querschnitt durch einen Flugzeugrumpf mit erfindungsgemäßer Beleuchtung,
- Figur 2: einen Schnitt durch die Decke einer Flugzeugkabine mit darin eingesteckten Leuchtdioden als punktförmige Lichtquellen,
- Figur 3: ein Schaltbild für die Ausführungsform mit hintereinander geschalteten Leuchtdioden.

Die in einem Flugzeugrumpf 1 befindliche Flugzeugkabine 2 wird unten von einem Kabinenboden 3 und oben von einer Kabinendecke 4 begrenzt. Auf dem Kabinenboden 3 stehen die in Sitzreihen 5 angeordneten Sitze 6, getrennt vom Kabinengang 7. In der Kabinendecke 4 sind punktförmige Lichtquellen 8 untergebracht. Je nach ihrer Helligkeit, Abstrahlcharakteristik, ihrer Verteilung in der Kabinendecke 4 und ihrer Dichte, d. h. ihrem Abstand voneinander, leuchten die punktförmigen Lichtquellen 8 die gesamte Flugzeugkabine aus oder dienen als Notbeleuchtung für den zwischen den Sitzreihen 5 befindlichen Gang 7.

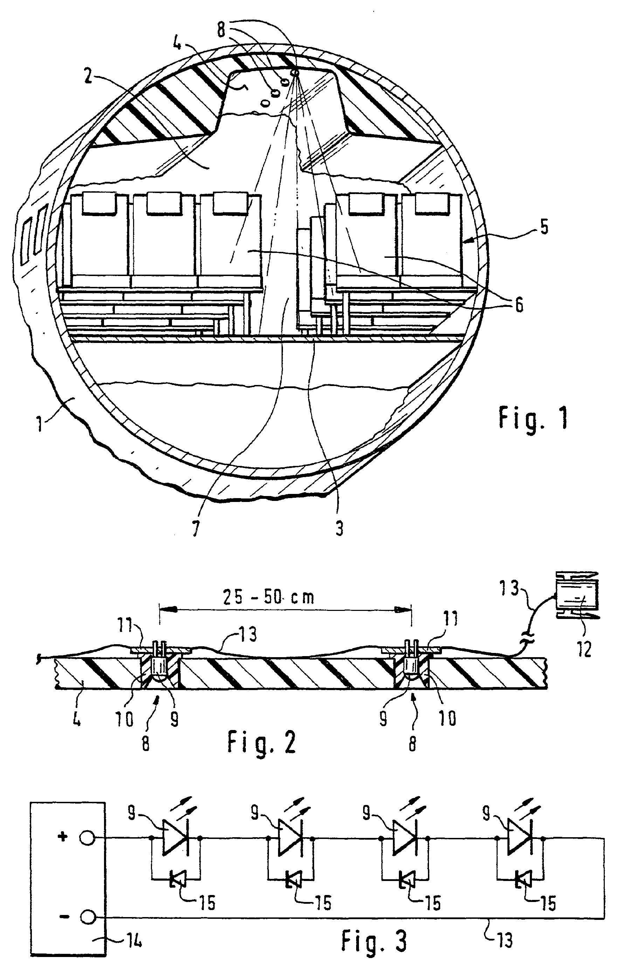

In dem gezeigten Ausführungsbeispiel handelt es sich um eine Notbeleuchtung mit in einer Reihe angeordneten punktförmigen Lichtquellen 8 über dem Kabinengang 7. Wie aus Figur 2 ersichtlich beträgt der Abstand zwischen zwei punktförmigen Lichtquellen 8 jeweils etwa 25 bis 50 cm. Die in die Kabinendecke 4 von oben eingesteckten punktförmigen Lichtquellen 8 bestehen aus Leuchtdioden (LED's) 9 welche jeweils in einem Gehäuse 10 untergebracht sind. Jede Leuchtdiode 9 ist mit ihrem Gehäuse 10 auf einer Halterungsplatte 11 befestigt. Die einzelnen Leuchtdioden 9 sind über nicht gezeichnete elektrische Anschlüsse, welche sich auf den Befestigungsplatten 11 befinden, untereinander und mit einem Stecker 12 jeweils mit einem flexiblen elektrisch leitenden Kabel 13 verbunden.

Die elektrische Verschaltung der Leuchtdioden 9 ist in Figur 3 gezeigt. Die Leuchtdioden 9 sind miteinander in Reihe verschaltet und über das Kabel 13 an eine elektrische Stromversorgung 14 angeschlossen. Zu jeder Leuchtdiode 9 ist jeweils eine Zener-Diode 15 parallel und in Sperrichtung geschaltet. Bei Ausfall einer Leuchtdiode 9 liegt fast die gesamte Spannung der Stromquelle 14 an der defekten Leuchtdiode 9 und der zu dieser parallel geschalteten Zener-Diode 15 an. Das führt dazu, daß diese Zener-Diode 15 durchbricht und der Strom über sie wieder fließen kann. Somit fällt, wenn eine Leuchtdiode defekt ist, nicht der gesamte Strang aus hintereinander geschalteten Leuchtdioden aus. Die Stromversorgung 14 ist vorzugshalber so ausgestaltet, daß sie einen konstanten Strom liefert, welcher zum Beispiel 20 mA betragen kann. Auf diese Weise ist sichergestellt, daß die einzelnen Leuchtdioden selbst bei Ausfall einer oder mehrerer Leuchtdioden und Durchbruch der jeweils parallel geschalteten Zener-Dioden nicht mit einer zu hohen Spannung beaufschlagt und somit überlastet werden.

Als Leuchtdioden werden weiße Leuchtdioden verwendet. Dabei kann es sich um zwei (zum Beispiel blau und gelb) oder drei (zum Beispiel blau, grün und rot) leuchtende Dioden handeln, welche zu einer ("weißen") Leuchtdiode zusammengefaßt sind. Es kann sich aber auch um sogenannte Lumineszenzkonversions-Dioden handeln, bei welchen das Licht von blaues oder kurzwelligeres Licht abstrahlenden Dioden ganz oder teilweise von Leuchtstoffen absorbiert und in längere Wellenlängenbereiche (zum Beispiel grün, gelb oder rot) konvertiert wird. Durch geschickte Überlagerung der verschiedenen Farben entsteht bei der Lumineszenzkonversions-Diode wie auch bei der aus mehreren farbigen Dioden bestehenden Leuchtdiode weißes oder weißliches Licht.

Es sei darauf hingewiesen, daß die erfindungsgemäße Flugzeugkabinen-Beleuchtung nicht auf den Einsatz als Notbeleuchtung beschränkt ist, sondern daß bei Verwendung genügend heller Leuchtdioden, bei entsprechender Dichte oder auch bei flächiger Verteilung der punktförmigen Lichtquellen über die Kabinendekke eine Ausleuchtung der gesamten Flugzeugkabine denkbar ist. Auch die Ausführung der über den Passagiersitzen angebrachten Leselampen mit Leuchtdioden ist möglich, ebenso die Beleuchtung des Cockpits oder des Frachtraums. Wie bereits erwähnt, betrifft die Erfindung nicht nur die Beleuchtung von Luftfahrzeugen, sondern die von Straßen-, Schienen-, Wasser- oder sonstigen Fahrzeugen in gleicher Weise.

## Patentansprüche

1. An oder in der Decke eines Fahrzeugs anbringbare Beleuchtung, insbesondere in einer Flugzeugkabine anbringbare Kabinenbeleuchtung, die aus mehreren punktförmigen Lichtquellen (8) besteht, **dadurch gekennzeichnet, dass** die punktförmigen Lichtquellen (8) jeweils aus einer Leuchtdiode (9) bestehen, die in einer Halterung (10) befestigt ist, welche von oben in eine Bohrung in der Decke (4) einbringbar ist, und zumindest teilweise miteinander parallel oder in Reihe verschaltet und an mindestens eine Stromversorgungseinheit (14) angeschlossen sind.

2. Fahrzeugbeleuchtung nach Anspruch 1,
**dadurch gekennzeichnet,**
**dass** zu jeder Leuchtdiode oder Leuchtdiodengruppe eine Zener-Diode (15) in Sperrrichtung parallel geschaltet ist.

3. Fahrzeugbeleuchtung nach Anspruch 1 oder 2,
**dadurch gekennzeichnet,**
**dass** die Stromversorgungseinheit (14) so beschaffen ist, dass sie für einen konstanten Stromfluss sorgt.

4. Fahrzeugbeleuchtung nach einem der vorherigen Ansprüche,
**dadurch gekennzeichnet,**
**dass** die Beleuchtung über den zwischen den Sitzreihen (5) befindlichen bzw. über sonstigen Gängen (7) anbringbar ist und als Notbeleuchtung dient.

5. Fahrzeugbeleuchtung nach Anspruch1,
**dadurch gekennzeichnet,**
**dass** der Abstand zwischen benachbarten Leuchtdioden (9) etwa zwischen 25 und 50 cm beträgt.

6. Fahrzeugbeleuchtung nach einem der vorherigen Ansprüche,
**dadurch gekennzeichnet,**
**dass** als Leuchtdioden weiße Leuchtdioden verwendet werden.

7. Fahrzeugbeleuchtung nach Anspruch 6,
**dadurch gekennzeichnet,**
**dass** die weißen Leuchtdioden aus zwei oder mehr farbigen Leuchtdioden gebildet werden.

8. Fahrzeugbeleuchtung nach Anspruch 6,
**dadurch gekennzeichnet,**
**dass** die weißen Leuchtdioden Lumineszenzkonversions-Dioden sind.

## Claims

1. Lighting system which can be mounted on or in the ceiling of a vehicle, in particular a cabin lighting system which can be mounted in an aircraft cabin, which lighting system comprises a plurality of point light sources (8), **characterized in that** the point light sources (8) each comprise a light-emitting diode (9) which is fixed in a mount (10) which can be inserted into a hole in the ceiling (4) from above, and at least some of which are connected to one another in parallel or in series, and which are connected to at least one power supply unit (14).

2. Vehicle lighting system according to Claim 1,
**characterized in that** a reverse-biased Zener diode (15) is connected in parallel with each light-emitting diode or light-emitting diode group.

3. Vehicle lighting system according to Claim 1 or 2, **characterized in that** the power supply unit (14) is furnished such that it provides a constant current flow.

4. Vehicle lighting system according to one of the preceding claims, **characterized in that** the lighting system can be mounted above the gangways (7) situated between the rows (5) of seats and/or above other gangways (7) and serves as an emergency lighting system.

5. Vehicle lighting system according to Claim 1,
**characterized in that** the distance between adjacent light-emitting diodes (9) is approximately between 25 and 50 cm.

6. Vehicle lighting system according to one of the preceding claims, **characterized in that** white light-emitting diodes are used as light-emitting diodes.

7. Vehicle lighting system according to Claim 6,
**characterized in that** the white light-emitting diodes are formed from two or more coloured light-emitting diodes.

8. Vehicle lighting system according to Claim 6,
**characterized in that** the white light-emitting diodes are luminescence conversion diodes.

## Revendications

1. Éclairage pouvant être installé sur ou dans le plafond d'un véhicule, notamment éclairage de cabine pouvant être installé dans une cabine d'aéronef, lequel se compose de plusieurs sources de lumière ponctuelles (8), **caractérisé en ce que** les sources de lumière ponctuelles (8) se composent à chaque fois d'une diode électroluminescente (9) qui est fixée dans un support (10), lequel peut être introduit par le dessus dans un perçage dans le plafond (4), et sont au moins partiellement branchées en parallèle ou en série entre elles et sont raccordées à au moins une unité d'alimentation électrique (14).

2. Éclairage pour véhicule selon la revendication 1, **caractérisé en ce qu'**une diode zener (15) est branchée en parallèle dans le sens du blocage avec chaque diode électroluminescente ou groupe de diodes électroluminescentes.

3. Éclairage pour véhicule selon la revendication 1 ou 2, **caractérisé en ce que** l'unité d'alimentation électrique (14) est réalisée de telle sorte qu'elle délivre un flux de courant constant.

4. Éclairage pour véhicule selon l'une des revendications précédentes, **caractérisé en ce** l'éclairage peut être installé au-dessus des couloirs (7) qui se trouvent entre les rangées de sièges (5) ou autres et sert d'éclairage de secours.

5. Éclairage pour véhicule selon la revendication 1, **caractérisé en ce que** l'espacement entre les diodes électroluminescentes (9) voisines est compris entre environ 25 et 50 cm.

6. Éclairage pour véhicule selon l'une des revendications précédentes, **caractérisé en ce que** les diodes électroluminescentes utilisées sont des diodes électroluminescentes blanches.

7. Éclairage pour véhicule selon la revendication 6, **caractérisé en ce que** les diodes électroluminescentes blanches sont formées par deux diodes électroluminescentes de couleur ou plus.

8. Éclairage pour véhicule selon la revendication 6, il **caractérisé en ce que** les diodes électroluminescentes blanches sont des diodes à conversion de luminescence.
